# EUROPÄISCHE PATENTSCHRIFT

(11) **EP 0 754 845 B1**
(45) Veröffentlichungstag und Bekanntmachung des Hinweises auf die Patenterteilung: **22.03.2000**
(21) Anmeldenummer: 96108741.8
(22) Anmeldetag: 31.05.1996
(51) Int. Cl.: F02B 77/08, F02P 17/12

(54) **Verfahren zur Erkennung von defekten Zünd- oder Einspritzvorrichtungen bei Verbrennungsmotoren**
Method of detection of a failure in the electronic or injection system of a combustion engine
Méthode pour détecter les défauts d'allumage ou d'injection dans un moteur à combustion

(30) Priorität: 21.07.1995 DE 19526644
(43) Veröffentlichungstag der Anmeldung: 22.01.1997
(73) Patentinhaber: DaimlerChrysler AG, 70567 Stuttgart (DE)
(72) Erfinder: Kalweit, Peter, 73614 Schorndorf (DE)

(56) Entgegenhaltungen:
- WO-A-94/11627
- DE-A- 3 934 338
- DE-A- 4 002 210

## Beschreibung

Die Erfindung betrifft ein Verfahren zur Erkennung von defekten Zünd- oder Einspritzvorrichtungen bei Verbrennungsmotoren mit mehreren Zylindern, bei dem eine Erkennung von Verbrennungsaussetzern, insbesondere anhand einer Überwachung der Laufruhe des Motors in Abhängigkeit vom Zünd- oder Einspritzzeitpunkt bestimmter Zylinder erfolgt.

Ein Verfahren dieser Art ist aus der DE 40 02 210 A1 für Motoren bekannt, die pro Zylinder nur eine Zündkerze besitzen. Verbrennungsaussetzer werden bei diesem bekannten Verfahren durch die Überwachung der Laufruhe des Motors insofern erfaßt, als man dort die Winkelgeschwindigkeit der Kurbelwelle mißt. Da diese nicht nur von eventuellen Zündaussetzern, sondern auch von Kräften beeinflußt wird, die von der Fahrbahn her über die Räder und den Antriebsstrang auf die Kurbelwelle übertragen werden, werden zusätzlich noch besondere Maßnahmen vorgesehen, um ohne besonders aufwendige Sensoren zu gewährleisten, daß ein fehlerhafter Zylinder so schnell wie möglich von der Kraftstoffzufuhr getrennt wird, eine Fehlentscheidung dabei aber vermieden wird. Die Trennung der Kraftstoffzufuhr wird in der Regel deswegen vorgenommen, weil durch Verbrennungsaussetzer der Katalysator zerstört werden kann. Es ergibt sich auch eine unerwünschte unvollständige Verbrennung.

Ein ähnliches Verfahren und eine Vorrichtung zur Durchführung einer Fehlzündungsüberwachung sind aus der DE 39 34 338 A1 und der DE 42 32 261 A1 bekannt. Auch dort setzt man die Messung der Winkelgeschwindigkeit der Kurbelwelle, d.h. also die Laufruhe als Maß für die Ermittlung von Aussetzern an, weil diese Methode noch am einfachsten ist.

Bekannt sind auch Motoren (DE 40 09 305 A1), deren Zylinder jeweils mit zwei Zündkerzen versehen sind, um den Verbrennungsablauf optimieren zu können. Bei solchen Motoren lassen sich die eingangs erwähnten Verfahren zur Erkennung von Verbrennungsaussetzern nicht mehr ohne weiteres anwenden. Die durch Zündaussetzer einer von zwei Zündkerzen bedingten Drehmomentschwankungen sind zu klein, um daraus über die Messung der Winkelgeschwindigkeit der Kurbelwelle zu verwertbaren Fehlerinformationen zu kommen. Messungen haben gezeigt, daß die Drehmomentabnahme bei Ausfall einer Zündkerze von Ottomotoren nur bei etwa 5% liegt, ein Wert, der die bekannte Überwachung der Laufruhe nicht mehr ermöglicht. Man hat deshalb dort vorgeschlagen, jeder Zündkerze besondere Prüfeinrichtungen zuzuordnen, so daß bei Feststellung eines Defektes an einer Zündkerze auf die andere Zündkerze umgeschaltet werden kann. Die Anordnung solcher gesonderter Prüfeinrichtungen ist aufwendig.

Für Motoren mit Brennstoffeinspritzventilen ist es schließlich auch bekannt (DE 33 44 229 A1), das Einspritzventil mit zwei Magnetsystemen zur Steuerung des Schließkörpers zu versehen, die jeweils gesondert elektrisch angesteuert werden und, weil man koaxial im ersten Schließkörper einen zweiten Schließkörper zur Steuerung einer zweiten Einspritzöffnung vorgesehen hat, dazu dienen können, das Einspritzvolumen entsprechend dem Brennstoffbedarf über den gesamten Betriebsbereich mit der notwendigen Genauigkeit zu dosieren. Eine Überwachung der beiden Magnetsysteme ist dort nicht vorgesehen.

Der Erfindung liegt daher die Aufgabe zugrunde, ein Verfahren der eingangs genannten Art so auszubilden, daß es auch für Ottomotoren mit jeweils zwei Zündkerzen pro Zylinder oder für Dieselmotoren mit jeweils zwei Einspritzdüsen pro Zylinder ohne einen zu großen Überwachungsaufwand durchführbar ist.

Zur Lösung dieser Aufgabe wird bei einem Verfahren der eingangs genannten Art vorgesehen, daß zeitweilig eine oder mehrere Zündkerzen oder Einspritzdüsen eines der Steuerkreise abgeschaltet werden, um bei den Zylindern, bei denen eine der Zündkerzen oder Einspritzdüsen ausgesetzt hat, eine vollständige Unterbindung des Verbrennungsvorganges zu erreichen und erkennen zu können.

Die Erfindung sieht daher das bewußte Abschalten bestimmter, entweder zyklisch oder in vorbestimmter Weise ausgewählter Zündkerzen vor, mit dem Ziel, durch diese Methode, wie bei Motoren mit nur einer Zündkerze pro Zylinder, ein vollständiges Aussetzen des betroffenen Zylinders zu erreichen, so daß dann über verhältnismäßig einfache Meßmethoden die Fehlerinformation geliefert wird und festgestellt werden kann, bei welchem Zylinder eine der beiden Zündkerzen oder eine der beiden Einspritzdüsen nicht funktioniert.

Durch diese Maßnahme kann in Weiterbildung der Erfindung zur Überwachung der Laufruhe des Motors die Drehmomentabgabe über die Winkelgeschwindigkeit der Kurbelwelle erfaßt werden, und es kann dann in Abhängigkeit von einem für einen bestimmten Zylinder erkannten Verbrennungsaussetzer die Kraftstoffzufuhr zu diesem Zylinder abgeschaltet werden.

Die Erfindung ist in der Zeichnung anhand eines Ausführungsbeispieles schematisch dargestellt und wird im folgenden erläutert. Es zeigen:
- Fig. 1: die schematische Darstellung eines 6-Zylinder-Ottomotors, bei dem jedem Zylinder jeweils zwei Zündkerzen zugeordnet sind, und
- Fig. 2: das Blockschaltbild des für die Ermittlung von Zündaussetzern der Zündkerzen des Motors nach Figur 1 vorgesehenen Verfahrens.

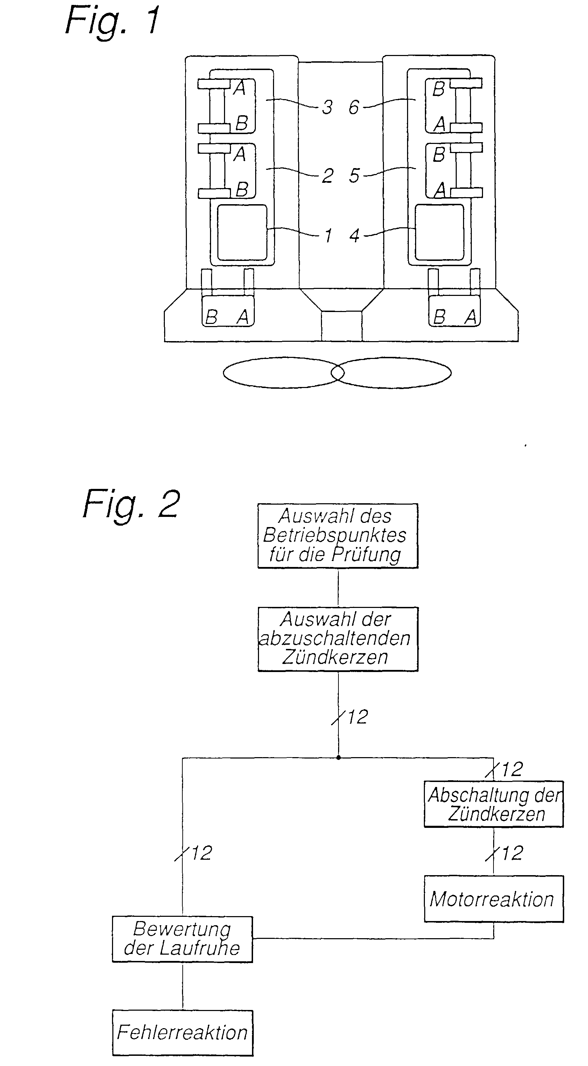

Aus der Figur 1 ist erkennbar, daß der schematisch dargestellte Ottomotor sechs Zylinder aufweist, die jeweils mit den Bezugszahlen (1, 2, 3, 4, 5 und 6) bezeichnet sind. Jedem dieser Zylinder sind nun zwei Zündkerzen zugeordnet, die jeweils unabhängig voneinander über parallel geschaltete Steuerkreise, gegebenenfalls zu unterschiedlichen Zeitpunkten, aktiviert werden können. Jedem der Zylinder 1 bis 6 ist daher eine Zündkerze (A) und eine Zündkerze (B) zugeordnet, die bei Normalbetrieb beide in Funktion sind.

Wenn nun die Zündkerze (B) des Zylinders (3) defekt sein sollte, dann findet eine ungenügende Verbrennung statt, die vermieden werden soll. Eine Überwachung gibt daher Aufschluß darüber, ob eine der 12 Zündkerzen des Motors nach Figur 1 defekt ist. Dazu wird zunächst nach Figur 2 ein Betriebspunkt für die Prüfung ausgewählt, und es erfolgt dann, beispielsweise über eine geeignete Software der Zündsteuerung, die Auswahl der abzuschaltenden Zündkerzen. Dies kann jeweils dadurch erfolgen, daß entweder der komplette Zündkreis für alle Zündkerzen (A), oder der komplette Zündkreis für alle Zündkerzen (B) kurzzeitig abgeschaltet wird. Möglich ist es aber auch, programmgesteuert einzelne Zündkerzen in größeren Abständen, z.B. 1% der Zündungen in ausgewählten Betriebspunkten oder stochastisch in einem Bereich vorzusehen, dessen Betriebspunkte die Aussetzererkennung über eine Laufunruhebewertung ermöglichen.

Wird daher im vorher angenommenen Fall, in dem die Zündkerze (B) des Zylinders (3) defekt ist, bei einer Überprüfung die dazugehörige Zündkerze (A) des Zylinders (3) zusätzlich abgeschaltet, dann findet im Zylinder (3) keine Verbrennung mehr statt, und dieser Aussetzer kann, wie bekannt, aufgrund des vollständigen Verlustes eines Drehmomentes dieses Zylinders (3) über bekannte Laufunruheüberwachungseinrichtungen erfaßt werden. Als defekt wird dann die Zündkerze (B) des Zylinders (3) ermittelt und gegebenenfalls in einem Speicher registriert. Außerdem kann für diesen Zylinder (3) der Zündzeitpunkt in Richtung früh verstellt und/oder die Einspritzmenge korrigiert werden. In Figur 2 zeigt dies der rechte Zweig des Blockschaltbildes. Aufgrund der Motorreaktion und der Bewertung der Laufruhe kann die Fehlerreaktion erfolgen.

## Patentansprüche

1. Verfahren zur Erkennung von defekten Zünd- oder Einspritzeinrichtungen bei Verbrennungsmotoren mit mehreren Zylindern, bei dem eine Erkennung von Verbrennungsaussetzern anhand einer Überwachung der Laufruhe des Motors in Abhängigkeit vom Zünd- oder Einspritzzeitpunkt bestimmter Zylinder erfolgt,
**dadurch gekennzeichnet, daß**
bei Verbrennungsmotoren mit zumindest zwei Zündkreisen (A, B) oder Einspritzkreisen pro Zylinder (1 bis 6) bei Doppelzündungsbetrieb bestimmte, entweder zyklisch oder in vorbestimmter Weise ausgewählte, einzelne Zündkerzen oder zumindest einer der beiden Zündkreise (A, B) oder Einspritzkreise jeweils eines Zylinders (1 bis 6) abgeschaltet werden, so daß bei Auftreten eines Verbrennungsaussetzers aufgrund des vollständigen Verlustes eines Drehmomentes dieses Zylinders die nicht abgeschaltete Zündkerze als defekt erkannt wird.

2. Verfahren nach Anspruch 1,
**dadurch gekennzeichnet,** daß
zur Überwachung der Laufruhe des Motors die Drehmomentabgabe über die Winkelgeschwindigkeit der Kurbelwelle erfaßt wird.

3. Verfahren nach Anspruch 1,
**dadurch gekennzeichnet,** daß
der als defekt erkannte Zünd- (A, B) oder Einspritzkreis in einer Speichereinheit registriert wird.

4. Verfahren nach Anspruch 1,
**dadurch gekennzeichnet,**
daß bei Zylindern (1 bis 6) mit einem defekten Zünd- (A, B) oder Einspritzkreis der Zündzeitpunkt und/oder die Einspritzmenge der funktionierenden Zünd- (A, B) beziehungsweise Einspritzkreise korrigiert wird.

## Claims

1. A method of detecting defective ignition or injection devices in internal combustion engines having several cylinders, whereby combustion misfiring is detected using a system of monitoring the smooth running of the engine depending on the ignition or injection timing of specific cylinders,
**characterised in that**
in internal combustion engines having at least two ignition circuits (A, B) or injection circuits per cylinder (1 to 6) in dual ignition operation, specific individual spark plugs or at least one of the two ignition circuits (A, B) or injection circuits respectively is shut off, either cyclically or in a predetermined manner, so that in the event of combustion misfiring the spark plug that is not shut off can be detected as being defective as a result of the total loss of torque at this cylinder.

2. A method as claimed in claim 1,
**characterised in that**
in order to monitor the smooth running of the engine, the torque output is detected by means of the angular velocity of the crankshaft.

3. A method as claimed in claim 1,
**characterised in that**
the ignition (A, B) or injection circuit detected as being defective is recorded in a storage unit.

4. A method as claimed in claim 1,
**characterised in that**
if there are cylinders (1 to 6) with a defective ignition (A, B) or injection circuit, the ignition point and/or the injection quantity of the functioning ignition (A, B) or injection circuits can be corrected.

## Revendications

1. Procédé de détection de dispositifs d'allumage ou d'injection défectueux sur des moteurs à combustion interne à plusieurs cylindres, selon lequel une détection de ratés de combustion s'effectue, en particulier par le moyen d'une surveillance de la stabilité de marche du moteur en fonction du moment d'allumage ou d'injection de cylindres déterminés,
caractérisé en ce que,
sur des moteurs à combustion interne possédant au moins deux circuits d'allumage (A, B) ou deux circuits d'injection par cylindre (1 à 6) en régime d'allumage jumelé, des bougies d'allumage individuelles déterminées, sélectionnées cycliquement ou de manière prédéterminée, ou, tout au moins, l'un des deux circuits d'allumage (A, B) ou d'injection de chaque fois un cylindre (1 à 6) sont coupés, si bien que, en cas d'apparition d'un raté de combustion, la bougie non déconnectée est détectée comme étant défectueuse en raison de la disparition complète du couple dû à ce cylindre.

2. Procédé selon la revendication 1, caractérisé en ce que, pour surveiller la stabilité de marche du moteur, on détermine le couple délivré par le biais de la vitesse angulaire du vilebrequin.

3. Procédé selon la revendication 1, caractérisé en ce que le circuit d'allumage (A, B) ou d'injection détecté comme étant défectueux, est enregistré dans une unité de mémorisation.

4. Procédé selon la revendication 1, caractérisé en ce que, dans le cas de cylindres (1 à 6) ayant un circuit d'allumage (A, B) ou d'injection défectueux, on corrige le moment d'allumage et/ou la quantité injectée du circuit d'allumage (A, B) ou d'injection fonctionnant.
